# EUROPÄISCHE PATENTSCHRIFT

(11) **EP 2 374 198 B1**
(45) Veröffentlichungstag und Bekanntmachung des Hinweises auf die Patenterteilung: **26.09.2012**
(21) Anmeldenummer: 09764500.6
(22) Anmeldetag: 01.12.2009
(51) Int. Cl.: H02K 1/16

(54) **ELEKTRISCHE MASCHINE MIT EINEM KLAUENPOLROTOR**
ELECTRIC MACHINE HAVING A CLAW-POLE ROTOR
MACHINE ÉLECTRIQUE AVEC ROTOR À PÔLES À GRIFFES

(30) Priorität: 08.12.2008 DE 102008054389
(43) Veröffentlichungstag der Anmeldung: 12.10.2011
(73) Patentinhaber: Robert Bosch GmbH, 70442 Stuttgart (DE)
(72) Erfinder: WOLF, Gert, 71563 Affalterbach (DE); RAU, Eberhard, 70825 Korntal-Muenchingen (DE); SHENDI, Alexander, 71679 Asperg (DE)
(86) Internationale Anmeldenummer: PCT/EP2009/066150
(87) Internationale Veröffentlichungsnummer: WO 2010/066609

(56) Entgegenhaltungen:
- EP-A2- 0 280 194
- DE-A1-102006 052 111
- JP-A- 60 039 352
- JP-A- 2000 350 390
- US-A1- 2006 163 966
- US-A1- 2007 216 253

## Beschreibung

### Stand der Technik

Die Erfindung geht aus von einer elektrischen Maschine mit einem Klauenpolrotor, insbesondere von einer elektrisch erregten Klauenpolmaschine für Kraftfahrzeuge, wie sie beispielsweise in der DE 10 2006 052 111 A1 beschrieben ist. Die dort offenbarte elektrische Maschine ist als Wechselstromgenerator ausgeführt mit einer fünfsträngigen Statorwicklung, welche wahlweise als einfache oder verteilte Wellenwicklung ausgebildet ist und weiterhin wahlweise auf einen kleinen Umfangsbereich des Wickelkopfes konzentrierte oder an dessen Umfang verteilte Anschlüsse aufweist. Die Anschlüsse der fünf Strangwicklungen sind nach Art eines Drudenfußes (Fünfeck mit fünf Kreuzungen, Pentagramm) mit einer Gleichrichteranordnung verbunden, wobei vorzugsweise alle zu verschaltenden Stranganschlüsse in benachbarten Nuten angeordnet sind.

### Offenbarung der Erfindung

Die erfindungsgemäße elektrische Maschine mit den Merkmalen des unabhängigen Anspruchs eignet sich insbesondere als riemengetriebener Generator oder Startergenerator für Kraftfahrzeuge. Sie besitzt gegenüber dem Stand der Technik den Vorteil, dass durch die spezielle Gestaltung einerseits die Nutfläche des Stators deutlich erhöht und die Nutstreuung verringert werden kann und andererseits die Statorwicklung als Einzugswicklung mit hohem Nutfüllfaktor kostengünstig und ohne die Gefahr der Beschädigung der Wicklungsisolation hergestellt werden kann. Außerdem kann die Geometrie des Ständerpakets verbessert und hierdurch Strömungsgeräusche und magnetische Geräusche verringert werden.

Besonders kostengünstig ist es, wenn das Statorblechpaket aus einem vorgestanzten Blechstreifen als hochkant gewickeltes Paket hergestellt ist. Die in die Statornuten eingebrachte Wicklung ist vorzugsweise als Wellenwicklung, insbesondere als fünfsträngige Wellenwicklung ausgebildet, welche zweckmäßigerweise als verteilte Wellenwicklung ausgeführt ist. Hierdurch können der Füllfaktor der Nuten und der Drahtdurchmesser der Leiter vergrößert werden, da die Einzugskraft für die Wicklung und die Reibung an den Zahnflanken gegenüber der Ausführung mit einer einfachen Wellenwicklung geringer ist. Durch eine vorzugsweise symmetrische Verteilung der Wicklungsanschlüsse am Wickelkopfumfang der Maschine erreicht man zusätzlich, dass deren Verschaltung mit ebenfalls in Umfangsrichtung verteilt im Statorgehäuse angeordneten Gleichrichterelementen vereinfacht wird.

Der Rotor der erfindungsgemäßen Maschine ist vorzugsweise als sechzehnpoliger Klauenpolrotor ausgebildet, da so die Jochhöhe des Stators verringert und demzufolge bei gleichem Außendurchmesser die Nuttiefe vergrößert werden kann. Weitere Einzelheiten und vorteilhafte Ausgestaltungen der Erfindung ergeben sich aus den Ansprüchen und der Beschreibung der Ausführungsbeispiele.

### Kurze Beschreibung der Zeichnungen

Ausführungsbeispiele der Erfindung sind in den Zeichnungen dargestellt und in der nachfolgenden Beschreibung näher erläutert.

Es zeigen
- Fig. 1: einen Längsschnitt durch einen Wechselstromgenerator für Kraftfahrzeuge mit einem Klauenpolrotor,
- Fig. 2: ein Schaltschema eines fünfsträngigen Wechselstromgenerators mit nachgeordnetem Gleichrichter,
- Fig. 3: eine Ansicht einer Statorlamelle der Maschine,
- Fig. 4: einen Ausschnitt aus einer Statorlamelle, deren Zähne eine konstante Zahnbreite aufweisen,
- Fig. 5: einen Ausschnitt aus einer Statorlamelle, deren Zahnbreite am Joch deutlich größer ist als am Luftspalt, und
- Fig. 6: eine normierte Darstellung der mit einem Wechselstromgenerator der erfindungsgemäßen Bauart erzielbaren Ströme.

### Ausführungsformen der Erfindung

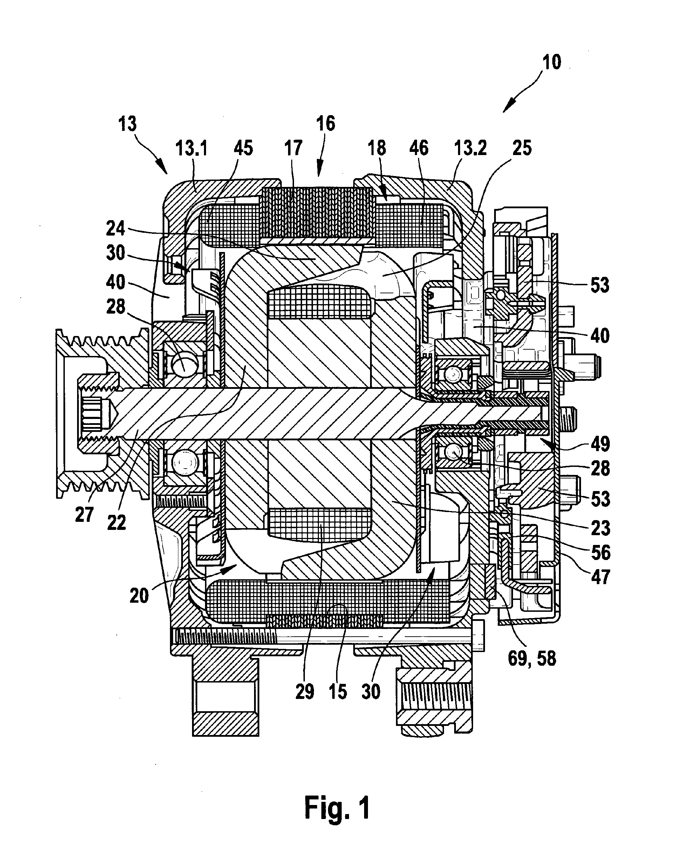

In Fig. 1 ist ein Schnitt durch einen Wechselstromgenerator 10 für Kraftfahrzeuge dargestellt. Dieser weist unter anderem ein zweiteiliges Gehäuse 13 auf, das aus einem ersten Lagerschild 13.1 und einem zweiten Lagerschild 13.2 besteht. Das Lagerschild 13.1 und das Lagerschild 13.2 nehmen in sich einen Stator 16 auf, mit einem kreisringförmigen Blechpaket 17, in dessen nach innen offene und sich axial erstreckende Nuten 15 eine Ständerwicklung 18 eingelegt ist. Der ringförmige Stator 16 umgibt mit seiner radial nach innen gerichteten Oberfläche einen elektromagnetisch erregten Rotor 20, der als sechzehnpoliger Klauenpol rotor ausgebildet ist. Der Rotor 20 besteht unter anderem aus zwei Klauenpolplatinen 22 und 23, an deren Außenumfang sich jeweils acht in axialer Richtung erstreckende Klauenpolfinger 24 und 25 angeordnet sind. Beide Klauenpolplatinen 22 und 23 sind im Rotor 20 derart angeordnet, dass ihre sich in axialer Richtung erstreckenden Klauenpolfinger 24, 25 am Umfang des Rotors 20 einander als N-und S-Pole abwechseln. Es ergeben sich dadurch magnetisch erforderliche Klauenpolzwischenräume zwischen den gegensinnig magnetisierten Klauenpolfingern 24 und 25, welche wegen der sich zu ihrem freien Enden hin verjüngenden Klauenpolfinger leicht schräg zur Maschinenachse verlaufen. Für die folgende Beschreibung der Erfindung ist dieser Verlauf vereinfacht als axial bezeichnet.

Der Rotor 20 ist mittels einer Welle 27 und je einem auf je einer Seite befindlichen Wälzlager 28 in den jeweiligen Lagerschilden 13.1 beziehungsweise 13.2 drehbar gelagert. Er weist zwei axiale Stirnflächen auf, an denen jeweils ein Lüfter 30 befestigt ist. Diese Lüfter 30 bestehen im Wesentlichen aus einem plattenförmigen beziehungsweise scheibenförmigen Abschnitt, von dem Lüfterschaufeln in bekannter Weise ausgehen. Die Lüfter 30 dienen dazu, über Öffnungen 40 in den Lagerschilden 13.1 und 13.2 einen Luftaustausch zwischen der Außenseite und dem Innenraum der elektrischen Maschine 10 zu ermöglichen. Dazu sind die Öffnungen 40 an den axialen Enden der Lagerschilde 13.1 und 13.2 vorgesehen, über die mittels der Lüfter 30 Kühlluft in den Innenraum der elektrischen Maschine 10 eingesaugt wird. Die Kühlluft wird durch die Rotation der Lüfter 30 radial nach außen beschleunigt, so dass sie auch durch die kühlluftdurchlässigen Wickelköpfe 45 auf der Antriebsseite und 46 auf der Elektronikseite hindurchtreten kann. Durch diesen Effekt werden die Wickelköpfe gekühlt. Die Kühlluft nimmt nach dem Hindurchtreten durch die Wickelköpfe, beziehungsweise nach dem Umströmen dieser Wickelköpfe einen Weg radial nach außen durch nicht dargestellte Öffnungen.

In Figur 1 auf der rechten Seite befindet sich eine Schutzkappe 47, die verschiedene Bauteile vor Umgebungseinflüssen schützt. So deckt diese Schutzkappe 47 beispielsweise eine Schleifringbaugruppe 49 ab, die eine Erregerwicklung 29 mit Erregerstrom versorgt. Um diese Schleifringbaugruppe 49 herum ist ein Kühlkörper 53 angeordnet, der hier als Pluskühlkörper wirkt. Als sogenannter Minuskühlkörper wirkt das Lagerschild 13.2. Zwischen dem Lagerschild 13.2 und dem Kühlkörper 53 ist eine Anschlussplatte 56 angeordnet, welche im Lagerschild 13.2 befestigte Minusdioden 58 und in dieser Darstellung nicht gezeigte Plusdioden eines Gleichrichters 69 im Kühlkörper 53 in Form einer Brückenschaltung miteinander verbindet.

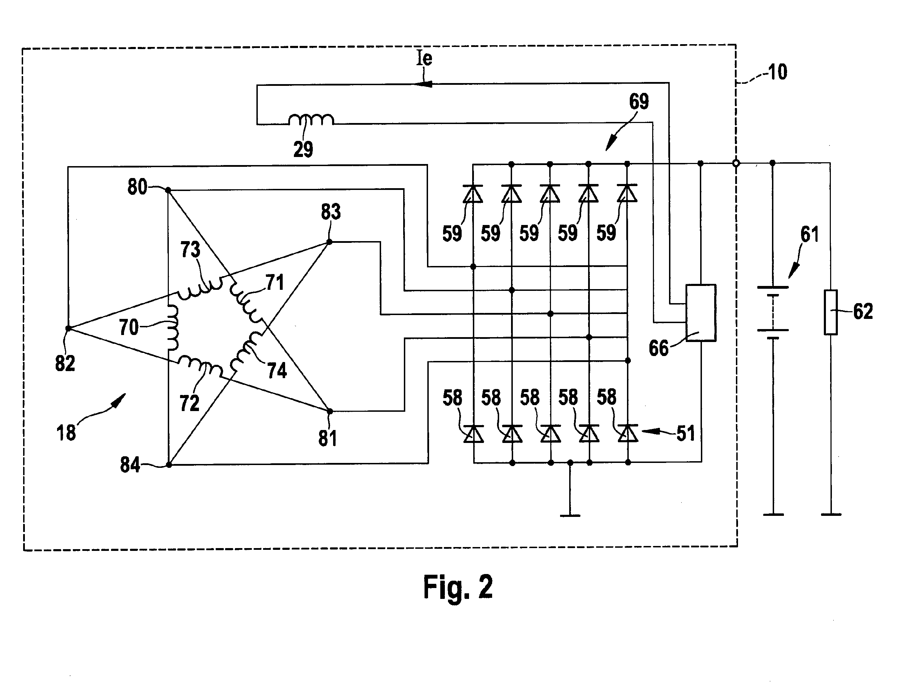

In Figur 2 ist ein Wechselstromgenerator 10 mit fünf phasenbildenden Wicklungssträngen 70, 71, 72, 73,74 anhand eines Schaltbildes dargestellt. Die Gesamtheit aller Wicklungsstränge 70, 71,72,73,74 bildet die Statorwicklung 18. Die fünf phasenbildenden Wicklungsstränge sind zu einer Grundschaltung als fünfzackiger Stern (Drudenfuß) verschaltet, wobei die jeweils in den Zacken des Sterns verschalteten Stränge einen Winkel von cirka 36° el. einschließen. An den Stromanschlüssen und Verschaltungspunkten 80, 81, 82, 83, 84 der Zacken des fünfzackigen Sterns ist ein Brückengleichrichter 69 angeschlossen.

Die Wicklungsstränge 70 bis 74 sind wie folgt verschaltet:
Der Wicklungsstrang 70 ist am Verschaltungspunkt 80 mit dem Wicklungsstrang 71 verbunden. Der Wicklungsstrang 71 ist an seinem gegenüber liegenden Ende am Verschaltungspunkt 81 mit dem Wicklungsstrang 72 verbunden. Der Wicklungsstrang 72 ist an seinem gegenüber liegenden Ende am Verschaltungspunkt 82 mit dem Wicklungsstrang 73 verbunden. Der Wicklungsstrang 73 ist an seinem gegenüber liegenden Ende am Verschaltungspunkt 83 mit dem Wicklungsstrang 74 verbunden. Der Wicklungsstrang 74 ist an seinem gegenüber liegenden Ende am Verschaltungspunkt 84 mit dem Wicklungsstrang 70 verbunden. Die Verschaltungspunkte befinden sich vorzugsweise axial auf oder neben dem elektronikseitigen Wickelkopf 46, um möglichst kurze Verschaltungswege zu realisieren. Hierzu treten die jeweils zu verschaltenden Anschlussdrähte der Wicklungsstränge 70 bis 74 eines Verschaltungspunktes 80 bis 84 vorzugsweise aus in Umfangsrichtung direkt benachbarten Nuten 15 aus. Die Verschaltungspunkte 80 bis 84 der Wicklungsstränge 70 bis 74 sind mit dem Brückengleichrichter 69 verbunden, der aus fünf Minusdioden 58 und fünf Plusdioden 59 aufgebaut ist. Gleichspannungsseitig ist ein Spannungsregler 66 parallel geschaltet, der durch Beeinflussung des Stromes Ie in der Erregerwicklung 29 die Spannung des Generators regelt. Zusätzlich kann der Spannungsregler noch eine Verbindung zum Gleichrichter aufweisen, um den Spannungsabfall über einer Diode zu messen und hieraus die aktuelle Drehzahl des Generators zu ermitteln.

Das Bordnetz eines Fahrzeuges ist schematisch durch die Fahrzeugbatterie 61 und durch einen Verbraucher 62 dargestellt. Zur Verbesserung der Regelung kann die Erregerwicklung 29 alternativ mit Hilfe von vier Endstufen angesteuert werden, die zu einer H-Brückenschaltung verbunden sind. Hierdurch wird es möglich, in die Erregerwicklung 29 auch negative Erregerströme einzuprägen. Dies ergibt Vorteile beim Abregeln der Leistung des Generators, beziehungsweise in Bezug auf die Regelgeschwindigkeit, da zum schnellen Abregeln auch negative Spannungen an die Erregerwicklung 29 angelegt werden können.

Selbstverständlich lassen sich auch andere Phasenzahlen und Verschaltungsarten in bekannter Weise darstellen. Besonders zu erwähnen sind hierzu dreiphasige und sechsphasige Systeme in Stern- oder Dreieckschaltung, wie sie beispielsweise in der DE-Patentanmeldung 10 2007 025 971.0 näher erläutert sind.

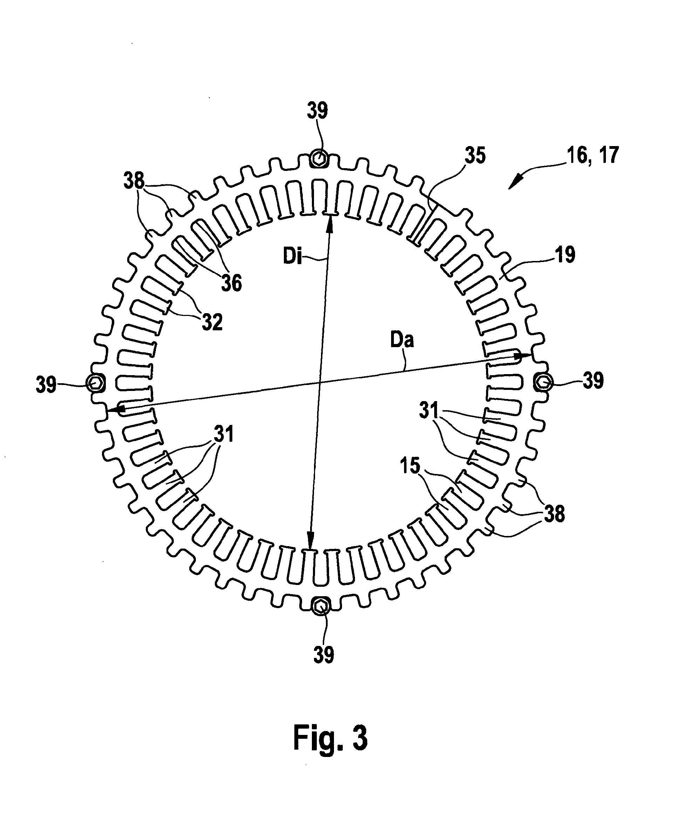

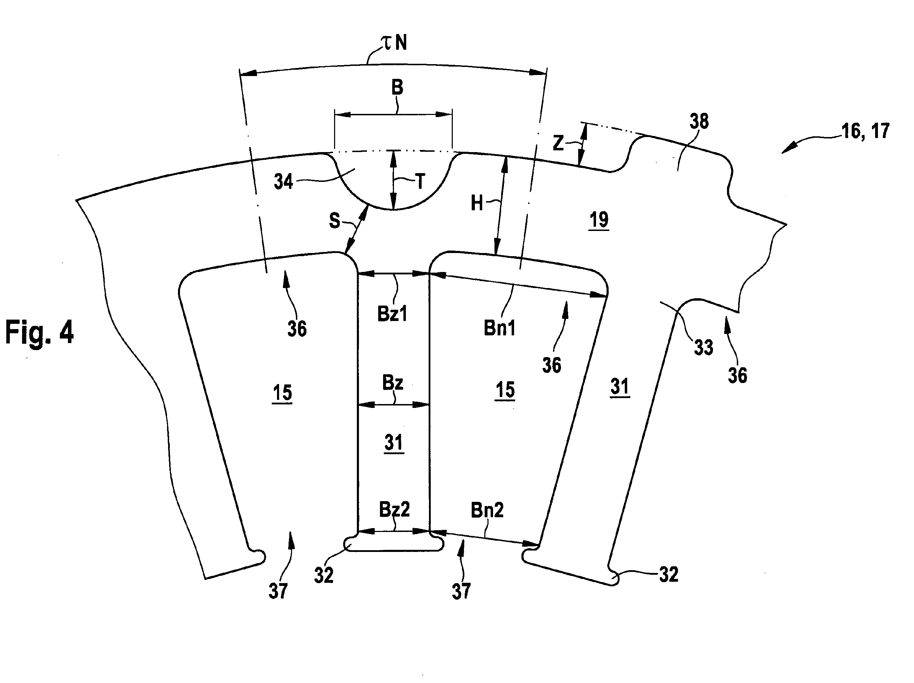

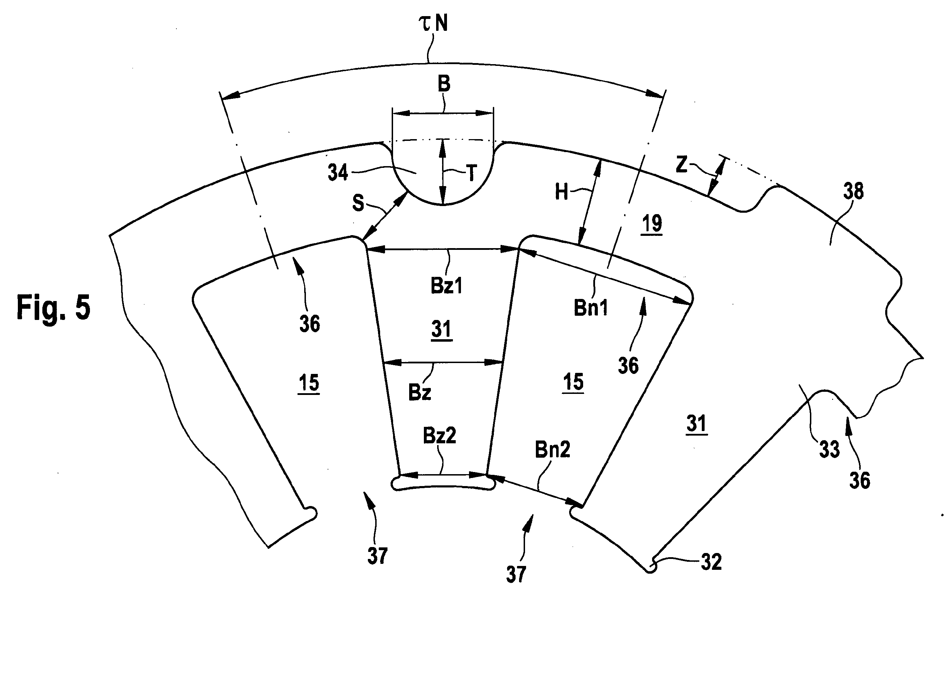

In Figur 3 ist schematisiert eine Lamelle, beziehungsweise eine Windung eines in bekannter Weise aus einem Blechstreifen hochkant gerollten Blechpaketes 17 des Stators 16 der Maschine dargestellt. Eine Trennlinie 35 kennzeichnet hierbei im gerollten Statorpaket den Anfang oder das Ende des Blechstreifens, bei einem aus einem Flachpaket gebogenen Stator 16 bezeichnet diese Trennlinie die zusammengefügten Stoßseiten des Blechpaketes. Vom Statorjoch 19 springen nach innen Statorzähne 31 vor, welche am Luftspalt Zahnköpfe 32 ausbilden. Auf der Außenseite des Statorjochs ragen den Zähnen 31 jeweils gegenüberliegende, kleinere Außenzähne 38 vor, welche mit Ausnahme des Bereichs der Trennlinie 35 gleichmäßig am Umfang angeordnet sind. Die Außenzähne sind magnetisch im Wesentlichen inaktiv und dienen ins Besondere der Positionierung des Stators 16 im Gehäuse 13 der Maschine. Die Lücke zwischen den Außenzähnen 38 im Bereich der Trennlinie 35 oder eine Einbuchtung entsprechend den Figuren 4 und 5 kann hierbei gleichzeitig als Markierung für die Zuordnung der Anschlusspositionen der Ständerwicklung auf dem Wickelkopf 46 verwendet werden. Zur Zentrierung des Blechpaketes 17 kann die Zahl der Außenzähne 38 jedoch auch reduziert werden bis auf eine Mindestzahl von drei Zähnen, die dann am Umfang im Wesentlichen gleichmäßig angeordnet sind. Die Positionierung von Statorspannschrauben 39 am Umfang des Statorjochs 19 erfolgt bei der Ausführung gemäß Figur 3 zwischen den Außenzähnen 38, alternativ in Einbuchtungen 34 am Statorjoch 19, welche an Hand der Figuren 4 und 5 noch näher erläutert werden. Der Innendurchmesser des Statorblechpaketes 17 ist mit Di bezeichnet. Der elektromagnetisch wirksame Ständeraußendurchmesser wird radial über den Nuten 15 gemessen und ist mit Da bezeichnet.

Figur 4 zeigt einen Ausschnitt aus einer Statorlamelle, beziehungsweise eine Draufsicht auf den entsprechenden Ausschnitt des Statorblechpaketes 17. Die Zähne 31 bildenden Abschnitte der Lamellen erstrecken sich in radialer Richtung und sind hierbei auf ihrer gesamten Länge gleich breit. Demzufolge entspricht die Zahnbreite Bz1 am Zahnfuß 33 der Zahnbreite Bz2 am Zahnkopf 32. Durch die Krümmung des Statorjochs 19 ergeben sich dann zwingend unterschiedliche Nutbreiten Bn1 am Nutgrund und Bn2 im Bereich der Nutöffnungen. Die Breite der Nut wird senkrecht zu einer radialen Linie gemessen, welche die Nut 15 in zwei gleich große Flächen teilt. Hierbei ist Bn1 die Breite am Nutgrund ohne Berücksichtigung der Verbreiterung der Zähne 31 durch die auslaufende Kontur am Nutgrund 36. Bn2 ist die minimale Breite einer Nut 15 ohne Berücksichtigung des Einschnürungsbereiches an der Nutöffnung 37 durch die Zahnköpfe 32. Der Ansatzpunkt für die Bestimmung der Nutbreite Bn2 liegt dabei typischerweise zwischen 1,024·Di und 1,026·Di entsprechend der Definition von Di in Figur 3. Sollten die Zähne 31 in Umfangsrichtung keinen ausgeprägten Zahnkopf 32 aufweisen, so wird die Nutbreite Bn2 bei 1,025·Di gemessen.

Bei der Ausführung gemäß Figur 4 liegt über dem rechts dargestellten Zahn 31 ein Außenzahn 38, während über dem benachbarten Zahn 31 eine Einbuchtung 34 im Statorjoch 19 vorgesehen ist. Diese Einbuchtung dient zur teilweisen Aufnahme einer Statorspannschraube 39, während der Zahn 38, wie bereits anhand der Figur 3 erläutert, der Positionierung des Stators 16 im Gehäuse 13 dient. Die Höhe des Statorjochs 19 ist dabei mit H bezeichnet, die Tiefe der Einbuchtung 34 mit T, die Breite der Einbuchtung 34 mit B und die verbleibende Jochstärke zwischen einer Nutecke und der Einbuchtung 34 mit S. Die Höhe der Außenzähne 38 ist mit Z bezeichnet, die Nutteilung mit τN.

Für die erfindungsgemäße Bemessung des Blechpaketes 17 des Stators 16 gilt Folgendes:
Die axiale Länge des Statorblechpaketes ist an den Klauenpolrotor 20 angepasst und beträgt 20 bis 45 mm, vorzugsweise 30 bis 40 mm. Der Innendurchmesser Di des Statorblechpaketes 17 beträgt 90 bis 115 mm, vorzugsweise 99 bis 112 mm. Das Verhältnis des Innendurchmessers Di zum Außendurchmesser Da des Statorblechpaketes 17 soll zumindest in Nutmitte im Bereich von 0,70 bis 0,77, vorzugsweise im Bereich von 0,73 bis 0,75 liegen, während das Verhältnis der Nutbreite Bn2 im Bereich der Nutöffnung 37 zur Nutbreite Bn1 am Nutgrund 36 0,69 bis 0,81, vorzugsweise 0,73 bis 0,78 betragen soll. Durch diese Gestaltung des Statorpaketes 17 mit verringerter Jochhöhe H, die abhängig von der Polzahl p der Maschine zwischen 3 mm und 10 mm, vorzugsweise zwischen 3,5 und 6 mm, liegt und bei gleichzeitiger Vergrößerung der Nutfläche kann die Ausgangsleistung der Maschine ohne Vergrößerung der Gesamtabmessungen deutlich gesteigert werden.

Zur sicheren Arretierung der Statorspannschrauben 39 sind am Außenumfang wenigstens drei Einbuchtungen 34 am Statorjoch 19 ausgespart, welche jeweils mittig über Statorzähnen 31 angeordnet und radial ausgerichtet sind. Vorzugsweise haben die Einbuchtungen 34 einen kreissegmentförmigen Querschnitt. Das Verhältnis der Tiefe T der Einbuchtungen 34 zur Höhe H des Statorjochs 19 liegt dabei im Bereich von 0,45 bis 0,85, vorzugsweise im Bereich von 0,55 bis 0,65.

Die Breite der Zähne 31 ist derart bemessen, dass sie dem 0,6- bis 0,8-fachen der Jochhöhe H entspricht. Dies gilt bei einer gleich bleibenden Zahnbreite gemäß Figur 4 für deren gesamte radiale Länge, bei konischer Ausbildung der Zähne 31, wie sie in Figur 5 dargestellt ist, gilt das Verhältnis von 0,6 bis 0,8 für die mittlere Zahnbreite Bz, welche als halber Wert der Summe aus der Zahnbreite Bz1 am Zahnfuß 33 und der Zahnbreite Bz2 am Zahnkopf 32 definiert wird, wobei die Zahnbreite Bz2 am Zahnkopf 1,5 mm, vorzugsweise 1,75 mm nicht unterschreitet.

Das Verhältnis der Zahnbreite gemäß Figur 4 oder der mittleren Zahnbreite Bz gemäß Figur 5 zur Nutteilung τN soll zwischen 0,4 und 0,5, vorzugsweise zwischen 0,45 und 0,5 liegen. Weiterhin gilt für die Zahnbreite, beziehungsweise die mittlere Zahnbreite Bz im Verhältnis zur Breite B einer Einbuchtung 34 im Statorjoch 19, dass das Verhältnis der Breite B der Einbuchtung zur Zahnbreite, beziehungsweise zur mittleren Zahnbreite Bz, im Bereich von 0,4 bis 0,65, vorzugsweise im Bereich von 0,5 bis 0,6 liegt. Das Verhältnis der reduzierten Jochstärke S zwischen dem Nutgrund 36 und einer Einbuchtung 34 zur Jochhöhe H liegt vorzugsweise im Bereich von 0,5 bis 0,8, insbesondere im Bereich von 0,5 bis 0,65. Die Außenzähne 38 sollen dabei nur soweit über den magnetisch wirksamen Außendurchmesser Da des Statorjochs 19 hinausragen, dass ihre Höhe Z einen Wert von 0,15 bis 0,35 der Höhe H des Statorjochs 19 nicht übersteigt. Durch diese zusätzlichen Gestaltungsmaßnahmen des Statorblechpaketes 17 können die Ausgangsleistung, die Maschinengeräusche und die Festigungsbedingungen der Maschine noch weiter verbessert werden.

Figur 5 zeigt eine alternative Gestaltung der Statorlamellen, beziehungsweise des aus einzelnen Lamellen geschichteten oder aus einem Band gewickelten Blechpaketes 17. Abweichend von der Ausführung gemäß Figur 4 sind hierbei die Statorzähne 31 mit kontinuierlich zunehmender Breite zwischen den Zahnköpfen 32 und den Zahnfüßen 33 ausgeführt. Die Vorgaben für die Bemessung des Jochs, der Zähne und der Nuten sind bereits anhand von Figur 4 erörtert worden, wobei gemäß Figur 5 jedoch anstelle der konstanten Zahnbreite die mittlere Zahnbreite Bz der Bemessung zugrunde gelegt wird. Im Übrigen gelten für diese Ausführung die gleichen Bemessungsregeln wie bei Beschreibung von der Figur 4.

Weitere Gestaltungsmaßnahmen betreffen die Ausführung der Statorwicklung 18 und des Rotors 20. Letzterer soll als sechzehnpoliger Klauenpolrotor 20 ausgeführt werden, weil hierdurch die Jochhöhe H des Stators 16 weiter verringert werden kann, entweder zur Erzielung eines kleineren Außendurchmessers der Maschine oder einer größeren Nuttiefe bei gleicher Baugröße. Hinsichtlich der Statorwicklung 18 gilt, dass diese vorzugsweise als Wellenwicklung, insbesondere als fünfsträngige Wellenwicklung ausgebildet wird, wobei eine verteilte Ausführung der Wicklung bevorzugt wird. Die verteilte Ausführung der Wicklung ergibt sich durch Umkehrung der Wickelrichtung, beziehungsweise des Wickelsinns nach ungefähr der halben Windungszahl, so dass die aus derselben Nut austretenden Leiter in den Wickelköpfen in beide Umfangsrichtungen aufgeteilt sind, was in Axialrichtung zu geringer ausladenden Wickelköpfen führt. Die verteilte Ausführung der Wicklung bietet den weiteren Vorteil, dass sie leichter in die Nuten 15 eingebracht werden kann mit geringerer Gefahr von Beschädigungen der Wicklungsisolation. Gleichzeitig besteht bei einer verteilten Wicklungsausführung die Möglichkeit zur Erzielung einer höheren Nutfüllung. Die Wicklungsanschlüsse der Statorstränge 70 bis 74 für die Verschaltungspunkte 80 bis 84 gemäß Figur 2 werden vorzugsweise zueinander am Umfang der Wickelköpfe verteilt aus benachbarten Nuten herausgeführt, wodurch sich kürzere Anschlüsse zu den einzelnen Elementen der Gleichrichteranordnung 69 ergeben, die ebenfalls über den Querschnitt des Maschinengehäuses 13 verteilt angeordnet sind. Die als Einzugswicklung ausgeführte Statorwicklung 18 wird dabei so angeordnet, dass die einzelnen Stränge 70 bis 74 in den Wickelköpfen 45, 46 lagenweise radial übereinander liegen.

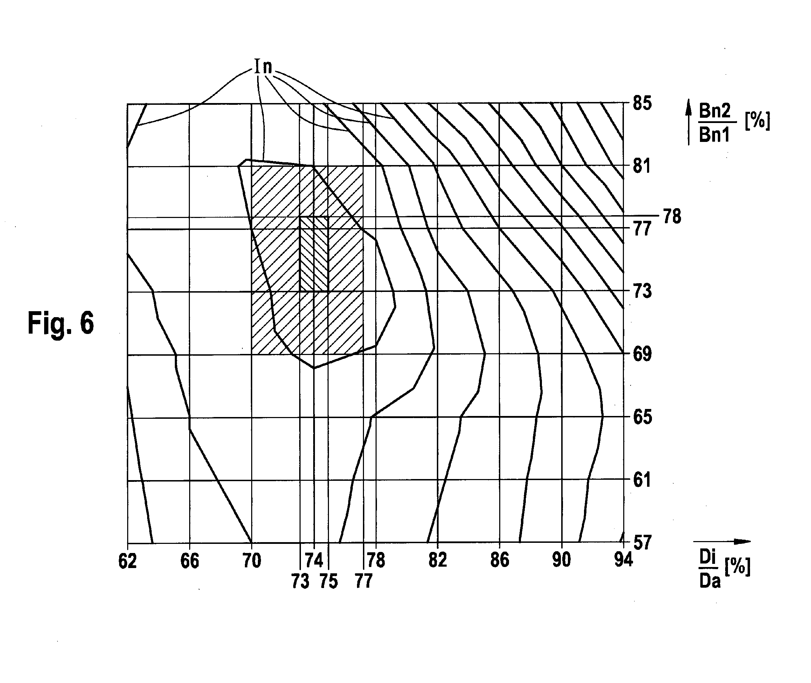

Figur 6 zeigt eine normierte Darstellung der mit einem Wechselstromgenerator der erfindungsgemäßen Bauart erzielbaren Ausgangsströme In der Maschine. Hierbei ist auf der Abszisse das Verhältnis des Innendurchmessers Di zum Außendurchmesser Da des Statorblechpaketes 17 aufgetragen, auf der Ordinate das Verhältnis der Nutbreite Bn2 an der Nutöffnung 37 zur Nutbreite Bn1 am Nutgrund. Das Diagramm zeigt für den typischen Arbeitspunkt der höchsten elektrischen und magnetischen Materialausnutzung die Änderung der Abgabeleistung durch Veränderung ausnutzungsrelevanter Abmessungen. Die vorgeschlagene Bemessung der elektrischen Maschine ergibt einen Bereich maximal erzielbarer Abgabeleistung. Der in dieser Darstellung schraffierte erfindungsgemäße Bereich für die Bemessung der vorgenannten Größen liefert höchstmögliche Ausgangsströme bei der jeweiligen Maschinenausführung, wie dies aus dem Verlauf der Linien gleicher Generatorströme In ersichtlich ist.

## Patentansprüche

1. Elektrische Maschine mit einem Klauenpolrotor, insbesondere elektrisch erregte, wenigstens zwölfpolige Klauenpolmaschine (10) für Kraftfahrzeuge, mit einem Stator (16), dessen Wicklung (18) mehrsträngig ausgebildet und mit ihren Stranganschlüssen (80 bis 84) mit einer Gleichrichteranordnung oder einer Pulswechselrichteranordnung (69) verbunden ist, **dadurch gekennzeichnet, dass** das Statorblechpaket (17) derart ausgebildet ist, dass das Verhältnis des Innendurchmessers (Di) zwischen den Stirnseiten der Zahnköpfe (32) diametral gegenüberliegender Statorzähne (31) zum Außendurchmesser (Da) des Statorjochs (19) zumindest in Nutmitte im Bereich von 0,70 bis 0,77 und das Verhältnis der Nutbreite (Bn2) an der Nutöffnung (37) im Bereich des Übergangs zum Zahnkopf (32) zur Nutbreite (Bn1) am Nutgrund (36) im Bereich von 0,69 bis 0,81 liegt.

2. Elektrische Maschine nach Anspruch 1, **dadurch gekennzeichnet, dass** das Verhältnis des Innendurchmessers (Di) zum Außendurchmesser (Da) des Statorblechpaketes (17) zumindest in Nutmitte im Bereich von 0,73 bis 0,75 und das Verhältnis der Nutbreite (Bn2) an der Nutöffnung (37) zur Nutbreite (Bn1) am Nutgrund (36) im Bereich von 0,73 bis 0,78 liegt.

3. Elektrische Maschine nach Anspruch 1 oder 2, **dadurch gekennzeichnet, dass** das Statorjoch (19) am Außenumfang im Wesentlichen mittig über wenigstens drei Statorzähnen (31) radial ausgerichtete Einbuchtungen (34) aufweist.

4. Elektrische Maschine nach Anspruch 3, **dadurch gekennzeichnet, dass** die Einbuchtungen (34) im Statorjoch (19) im Wesentlichen kreissegmentförmig sind.

5. Elektrische Maschine nach Anspruch 3 oder 4, **dadurch gekennzeichnet, dass** das Verhältnis der Tiefe (T) der Einbuchtungen (34) zur Höhe (H) des Statorjochs (19) im Bereich von 0,45 bis 0,85, vorzugsweise im Bereich von 0,55 bis 0,65, liegt.

6. Elektrische Maschine nach einem der vorhergehenden Ansprüche, **dadurch gekennzeichnet, dass** das Statorblechpaket (17) derart ausgebildet ist, dass das Verhältnis der mittleren Zahnbreite (Bz) zur Jochhöhe (H) im Bereich von 0,6 bis 0,8 liegt.

7. Elektrische Maschine nach einem der vorhergehenden Ansprüche, **dadurch gekennzeichnet, dass** das Verhältnis der mittleren Zahnbreite (Bz) zur Nutteilung (τN) im Bereich von 0,4 bis 0,5, vorzugsweise im Bereich von 0,45 bis 0,5 liegt.

8. Elektrische Maschine nach einem der vorhergehenden Ansprüche, **dadurch gekennzeichnet, dass** das Verhältnis der Jochstärke (S) zwischen einer Ecke am Nutgrund (36) und einer Einbuchtung (34) zur Jochhöhe (H) im Bereich von 0,5 bis 0,8, vorzugsweise im Bereich von 0,5 bis 0,65 liegt.

9. Elektrische Maschine nach einem der vorhergehenden Ansprüche, **dadurch gekennzeichnet, dass** das Verhältnis der Breite (B) einer Einbuchtung (34) im Statorjoch (19) zur mittleren Zahnbreite (Bz) im Bereich von 0,4 bis 0,65, vorzugsweise im Bereich 0,5 bis 0,6 liegt.

10. Elektrische Maschine nach einem der vorhergehenden Ansprüche, **dadurch gekennzeichnet, dass** am Umfang des Statorjochs (19) Außenzähne (38) angeformt sind.

11. Elektrische Maschine nach Anspruch 10, **dadurch gekennzeichnet, dass** das Verhältnis der Höhe (Z) der Außenzähne (38) zur Höhe (H) des Statorjochs (19) im Bereich von 0,15 bis 0,35 liegt.

12. Elektrische Maschine nach einem der vorhergehenden Ansprüche, **dadurch gekennzeichnet, dass** das Statorblechpaket (17) aus einem vorgestanzten Blechstreifen als hochkant gewickeltes Paket ausgeführt ist.

13. Elektrische Maschine nach einem der vorhergehenden Ansprüche, **dadurch gekennzeichnet, dass** der Klauenpolrotor (20) sechzehnpolig ausgebildet ist.

14. Elektrische Maschine nach einem der vorhergehenden Ansprüche, **dadurch gekennzeichnet, dass** die Statorwicklung (18) als Wellenwicklung ausgebildet ist.

15. Elektrische Maschine nach Anspruch 14, **dadurch gekennzeichnet, dass** die Statorwicklung (18) als fünfsträngige Wellenwicklung ausgebildet ist.

16. Elektrische Maschine nach Anspruch 14 oder 15, **dadurch gekennzeichnet, dass** die Statorwicklung (18) als verteilte Wellenwicklung ausgebildet ist.

17. Elektrische Maschine nach einem der vorhergehenden Ansprüche, **dadurch gekennzeichnet, dass** die Anschlüsse (80 bis 84) der Statorstränge (70 bis 74) am Umfang des Stators (16) verteilt zur Gleichrichteranordnung (69) herausgeführt sind.

18. Elektrische Maschine nach einem der vorhergehenden Ansprüche, **dadurch gekennzeichnet, dass** die Statorwicklung (18) als Einzugswicklung ausgeführt ist.

19. Elektrische Maschine nach einem der vorhergehenden Ansprüche, **dadurch gekennzeichnet, dass** die Stränge (70 bis 74) der Statorwicklung (18) in den Wickelköpfen (45, 46) lagenweise radial übereinander angeordnet sind.

## Claims

1. Electric machine having a claw-pole rotor, in particular an electrically excited, at least twelve-pole claw-pole machine (10) for motor vehicles, having a stator (16), whose winding (18) has a plurality of winding phases and is connected with its winding phase connections (80 to 84) to a rectifier arrangement or pulse-controlled inverter arrangement (69), **characterized in that** the stator laminate stack (17) is designed in such a way that the ratio of the inner diameter (Di) between the end sides of the tooth tips (32) of diametrically opposite stator teeth (31) to the outer diameter (Da) of the stator yoke (19) at least in the slot centre is in the range of from 0.70 to 0.77, and the ratio of the slot width (Bn2) at the slot opening (37) in the region of the transition to the tooth tip (32) to the slot width (Bn1) at the slot base (36) is in the range of from 0.69 to 0.81.

2. Electric machine according to Claim 1, **characterized in that** the ratio of the inner diameter (Di) to the outer diameter (Da) of the stator laminate stack (17) at least in the slot centre is in the range of from 0.73 to 0.75, and the ratio of the slot width (Bn2) at the slot opening (37) to the slot width (Bn1) at the slot base (36) is in the range of from 0.73 to 0.78.

3. Electric machine according to Claim 1 or 2, **characterized in that** the stator yoke (19) has recesses (34) which are aligned radially on the outer circumference substantially centrally over at least three stator teeth (31).

4. Electric machine according to Claim 3, **characterized in that** the recesses (34) in the stator yoke (19) are substantially in the form of segments of a circle.

5. Electric machine according to Claim 3 or 4, **characterized in that** the ratio of the depth (T) of the recesses (34) to the height (H) of the stator yoke (19) is in the range of from 0.45 to 0.85, preferably in the range of from 0.55 to 0.65.

6. Electric machine according to one of the preceding claims, **characterized in that** the stator laminate stack (17) is designed in such a way that the ratio of the central tooth width (Bz) to the yoke height (H) is in the range of from 0.6 to 0.8.

7. Electric machine according to one of the preceding claims, **characterized in that** the ratio of the central tooth width (Bz) to the slot pitch (τN) is in the range of from 0.4 to 0.5, preferably in the range of from 0.45 to 0.5.

8. Electric machine according to one of the preceding claims, **characterized in that** the ratio of the yoke thickness (S) between a corner at the slot base (36) and a recess (34) to the yoke height (H) is in the range of from 0.5 to 0.8, preferably in the range of from 0.5 to 0.65.

9. Electric machine according to one of the preceding claims, **characterized in that** the ratio of the width (B) of a recess (34) in the stator yoke (19) to the central tooth width (Bz) is in the range of from 0.4 to 0.65, preferably in the range of from 0.5 to 0.6.

10. Electric machine according to one of the preceding claims, **characterized in that** outer teeth (38) are formed integrally on the circumference of the stator yoke (19).

11. Electric machine according to Claim 10, **characterized in that** the ratio of the height (Z) of the outer teeth (38) to the height (H) of the stator yoke (19) is in the range of from 0.15 to 0.35.

12. Electric machine according to one of the preceding claims, **characterized in that** the stator laminate stack (17) is formed from a pre-stamped sheet-metal strip as a stack wound edgewise.

13. Electric machine according to one of the preceding claims, **characterized in that** the claw-pole rotor (20) is formed with sixteen poles.

14. Electric machine according to one of the preceding claims, **characterized in that** the stator winding (18) is in the form of a wave winding.

15. Electric machine according to Claim 14, **characterized in that** the stator winding (18) is in the form of a wave winding with five winding phases.

16. Electric machine according to Claim 14 or 15, **characterized in that** the stator winding (18) is in the form of a distributed wave winding.

17. Electric machine according to one of the preceding claims, **characterized in that** the connections (80 to 84) of the stator winding phases (70 to 74) are passed out to the rectifier arrangement (69) in a manner distributed over the circumference of the stator (16).

18. Electric machine according to one of the preceding claims, **characterized in that** the stator winding (18) is in the form of a pull-in winding.

19. Electric machine according to one of the preceding claims, **characterized in that** the winding phases (70 to 74) of the stator winding (18) are arranged in the winding heads (45, 46) in layers radially one above the other.

## Revendications

1. Machine électrique équipée d'un rotor à pôles à griffes, notamment machine à pôles à griffes (10) à excitation électrique dotée d'au moins douze pôles, pour véhicules automobiles, avec un stator (16) dont l'enroulement (18) est réalisé en plusieurs phases et relié avec ses raccords de phase (80 à 84) à un agencement de redresseur ou à un agencement d'ondulateur pulsé (69), **caractérisée en ce que** le paquet de tôle de stator (17) est réalisé de telle sorte que le rapport du diamètre intérieur (Di) mesuré entre les côtés avant des têtes de dent (32) des dents de stator (31) diamétralement opposées sur le diamètre extérieur (Da) de la culasse de stator (19) se situe, au moins au centre de la rainure, dans la plage allant de 0,70 à 0,77 et que le rapport de la largeur de rainure (Bn2) mesurée au niveau de l'ouverture de rainure (37) dans la zone de transition conduisant à la tête de dent (32) sur la largeur de rainure (Bn1) mesurée au niveau du fond de rainure (36) se situe dans la plage allant de 0,69 à 0,81.

2. Machine électrique selon la revendication 1, **caractérisée en ce que** le rapport du diamètre intérieur (Di) sur le diamètre extérieur (Da) du paquet de tôle de stator (17) se situe dans la plage allant de 0,73 à 0,75 au moins au centre de la rainure et que le rapport de la largeur de rainure (Bn2) mesurée au niveau de l'ouverture de rainure (37) sur la largeur de rainure (Bn1) mesurée au niveau du fond de rainure (36) se situe dans la plage allant de 0,73 à 0,78.

3. Machine électrique selon la revendication 1 ou 2, **caractérisée en ce que** la culasse de stator (19) présente, au niveau de la périphérie extérieure, des anfractuosités (34) alignées dans le plan radial pour l'essentiel de façon centrale au-dessus d'au moins trois dents de stator (31).

4. Machine électrique selon la revendication 3, **caractérisée en ce que** les anfractuosités (34) réalisées dans la culasse de stator (19) prennent pour l'essentiel la forme de segments de cercle.

5. Machine électrique selon la revendication 3 ou 4, **caractérisée en ce que** le rapport de la profondeur (T) des anfractuosités (34) sur la hauteur (H) de la culasse de stator (19) se situe dans la plage allant de 0,45 à 0,85, de préférence dans la plage allant de 0,55 à 0,65.

6. Machine électrique selon l'une quelconque des revendications précédentes, **caractérisée en ce que** le paquet de tôle de stator (17) est réalisé de telle sorte que le rapport de la largeur de dent moyenne (Bz) sur la hauteur de la culasse (H) se situe dans la plage allant de 0,6 à 0,8.

7. Machine électrique selon l'une quelconque des revendications précédentes, **caractérisée en ce que** le rapport de la largeur de dent moyenne (Bz) sur la division de la rainure (τN) se situe dans la plage allant de 0,4 à 0,5, de préférence dans la plage allant de 0,45 à 0,5.

8. Machine électrique selon l'une quelconque des revendications précédentes, **caractérisée en ce que** le rapport de l'épaisseur de la culasse (S) mesurée entre un coin situé au niveau du fond de rainure (36) et une anfractuosité (34) sur la hauteur de la culasse (H) se situe dans la plage allant de 0,5 à 0,8, de préférence dans la plage allant de 0,5 à 0,65.

9. Machine électrique selon l'une quelconque des revendications précédentes, **caractérisée en ce que** le rapport de la largeur (B) d'une anfractuosité (34) réalisée dans la culasse de stator (19) sur la largeur de dent moyenne (Bz) se situe dans la plage allant de 0,4 à 0,65, de préférence dans la plage allant de 0,5 à 0,6.

10. Machine électrique selon l'une quelconque des revendications précédentes, **caractérisée en ce que** des dents extérieures (38) sont réalisées au niveau de la périphérie de la culasse de stator (19).

11. Machine électrique selon la revendication 10, **caractérisée en ce que** le rapport de la hauteur (Z) des dents extérieures (38) sur la hauteur (H) de la culasse de stator (19) se situe dans la plage allant de 0,15 à 0,35.

12. Machine électrique selon l'une quelconque des revendications précédentes, **caractérisée en ce que** le paquet de tôle de stator (17) est réalisé à partir d'une bande de tôle préestampée prenant la forme d'un paquet enroulé verticalement.

13. Machine électrique selon l'une quelconque des revendications précédentes, **caractérisée en ce que** le rotor à pôles à griffes (20) comporte seize pôles.

14. Machine électrique selon l'une quelconque des revendications précédentes, **caractérisée en ce que** l'enroulement de stator (18) prend la forme d'un enroulement ondulé.

15. Machine électrique selon la revendication 14, **caractérisée en ce que** l'enroulement de stator (18) prend la forme d'un enroulement ondulé à cinq phases.

16. Machine électrique selon la revendication 14 ou 15, **caractérisée en ce que** l'enroulement de stator (18) prend la forme d'un enroulement ondulé réparti.

17. Machine électrique selon l'une quelconque des revendications précédentes, **caractérisée en ce que** les raccords (80 à 84) des phases de stator (70 à 74) sont réalisés de façon répartie par rapport à l'agencement de redresseur (69) au niveau de la périphérie du stator (16).

18. Machine électrique selon l'une quelconque des revendications précédentes, **caractérisée en ce que** l'enroulement de stator (18) prend la forme d'un enroulement d'appel.

19. Machine électrique selon l'une quelconque des revendications précédentes, **caractérisée en ce que** les phases (70 à 74) de l'enroulement de stator (18) sont disposées à plat les unes au-dessus des autres dans le plan radial dans les têtes de bobine (45, 46).
